# EUROPEAN PATENT SPECIFICATION

(11) **EP 2 627 034 B1**
(45) Date of publication and mention of the grant of the patent: **04.10.2017**
(21) Application number: 12154738.4
(22) Date of filing: 09.02.2012
(51) Int. Cl.: H04L 12/14, H04L 12/24

(54) **SYSTEM AND METHOD FOR POLICY AND/OR CHARGING CONTROL IN A MOBILE COMMUNICATION NETWORK**
System und Verfahren zur Richtlinien- und/oder Ladungssteuerung in einem mobilen Kommunikationsnetzwerk
Système et procédé de politique et/ou de contrôle de chargement dans un réseau de communication mobile

(43) Date of publication of application: 14.08.2013
(73) Proprietor: Vodafone Holding GmbH, 40213 Düsseldorf (DE)
(72) Inventor: Fassmer, Jens, 40668 Meerbusch (DE); Hillier, Michael, 64347 Griesheim (DE)
(74) Representative: Jostarndt Patentanwalts-AG

(56) References cited:
- EP-A2- 2 518 937
- WO-A1-2008/086888
- WO-A1-2009/114923
- US-A1- 2002 193 093
- US-A1- 2010 076 777

## Description

The invention relates to policy and/or charging control in a mobile communications network. More specifically the invention is related to a system for policy and/or charging control in a mobile communication network and a method for operating a mobile communication network.

Currently, in order to modify policy and charging parameters mobile subscribers may request a corresponding modification with the operator of the mobile communication network they have subscribed to. The operator then enters the requested modifications in the operator's provisioning system, which implements the modifications in the policy and charging subsystem of the mobile communication network. Usually, this process requires a relatively large processing time and the subscriber is not able to change policy and charging parameters directly.

Moreover, charging and policy parameters included in a user profile are relatively static and are not adapted to the behaviour of the subscriber and his usage of the mobile communication network. Therefore, the user carefully has to select such parameters in order to be able to use the services of the mobile communication network such that he can access all services and resources which are of interest for him and to use the services of the mobile communication device under the conditions (tariffs etc.) best suited for him.

WO 2009/114923 A1 discloses a configurator is provided being connected with various disparate elements in a telecommunication system. The configurator is adapted to receive a traffic plan that has a plurality of different aspects that are implemented across the disparate elements. The configurator is adapted to generate processing schemas and/or databases that can be used by the disparate elements in order to implement the traffic plan.

US 2002/0193093 A1 discloses a method for replenishing a prepaid account during a communications session. WO2008/086888 A1 discloses two variants for negotiating tariff to be applied to a given user of a service: one variant is network centric, i.e., it involves a tariff proposal entity being part of the network, while the other variant addresses a built-in tariff proposal entity embedded in the user terminal. It is an object of the present invention to solve at least one of the aforementioned problems.

The object is achieved by a system according to claim 1 and by a method according to claim 11. Embodiments of the system and the method are given in the dependent claims.

According to a first aspect of the invention, a system for policy and/or charging control in a mobile communication network is suggested. The system comprises a policy and/or charging control subsystem storing policy and/or charging parameters in a subscriber account and the system further comprises a communication server operatively coupled to the policy and/or charging control subsystem of the mobile communication network. Further, the system comprises a communication application included in a user terminal device. The communication server is configured to receive a change request for changing a policy or charging parameter in the subscriber account from the communication application and to instruct the policy and charging control subsystem to change the policy or charging parameter according to the received request.

According to a further aspect, the invention suggests a method for operating a mobile communication network. The mobile communication network comprises a policy and/or charging control subsystem storing policy and/or charging parameters in a subscriber account. A communication server is operatively coupled to the policy and/or charging control subsystem of the mobile communication network and the communication server is configured to communicate with a communication application included in a subscriber terminal device. The method comprises receiving in the communication server a request for changing a policy and/or charging parameter in the subscriber account from the communication application, and transmitting from the communication server to the policy and/or charging control subsystem an instruction to change the policy and/or charging parameter according to the received request. The method further comprises the step of determining a recommendation for changing at least one policy or charging parameter and to provide the recommendation to the communication application for presenting the recommendation at the subscriber terminal device by means of the communication server.

It is an advantage of the invention that a policy or charging parameter can be changed using a communication application in a user terminal device. Hereby, a subscriber is given the option to directly modify his policy and/or charging parameters. Preferably, the policy and/or charging control subsystem is configured to change the policy and/or charging parameter essentially immediately, when receiving the instruction to change the parameter, i.e. immediately upon receipt of the instruction or after a short processing time. Thus, the subscriber is enabled to modify policy and/or charging parameters essentially in real-time using the communication application.

The communication application advantageously communicates with the communication server and not with the policy and/or charging control subsystem. Hereby, it is achieved that the structure of a policy and/or charging control subsystem does not have to be adapted to the communication application. This simplifies the adaption of an existing policy and/or charging control subsystem of a mobile communication network which does not dispose of an interface for access by the subscriber terminal device.

In one embodiment of the system and the method, the communication server is configured to transmit a current value of at least one policy or charging parameter and/or consumption data included in the subscriber account to the communication application, the communication application being configured to display the received value at the user terminal device. A related embodiment of the system and the method provides that the communication server is configured to retrieve the current value of the policy and charging parameter and/or the consumption data from the policy and charging subsystem.

The communication server is configured to determine a recommendation for changing at least one policy or charging parameter and to provide the recommendation to the communication application for presenting the recommendation at the sub-scriber terminal device. In this embodiment, the suitable modifications of policy and/or charging parameters are facilitated by corresponding recommendations provided by the communication server. Advantageously, the policy and/or charging control subsystem does not have to be modified in order to determine the recommendations, since the recommendations are determined in the communication server.

The recommendations may be presented to the subscriber when he accesses the communication application on his own initiative. A further embodiment of the system and the method comprises that the recommendation is provided to the communication application in connection with a notification, the transmission of the notification being initiated by the communication server. This allows making reccommendations at a point in time, when the communication server determines that a modification of a policy or charging parameter appears useful. Thus, the communication server can initiate a modification of a policy and/or charging parameter, when it determines that need arises.

In one embodiment of the system and the method, the communication server is configured to determine the recommendation based on current values of policy and charging parameters and/or monitored usage of the mobile communication network by the subscriber. The latter particularly allows for adapting the policy and charging parameters in a subscriber account to the behaviour of the sub-scriber when using the mobile communication network. In view thereof, one embodiment of the system and the method provides that the communication server is configured to determine the recommendation based on consumption data measured for the subscriber and/or a determined location of the subscriber.

The recommendation is determined based on a predetermined event, the occurrence of the event being detected in the mobile communication network. This allows defining specific user actions and other events which lead to the determination of a recommendation, the event being the subscriber requesting a predetermined service. In a further embodiment of the system and the method the communication server is configured to change the policy or charging parameter upon verifying the authorization of a user of the communication application for changing the policy or charging parameter. A related embodiment includes that the communication server is configured to determine that the user of the communication application is authorized to change the policy or charging parameter, if the subscriber account belongs to the user and/or the subscriber account is associated with the subscriber account of the user. Hereby, the user of a terminal device can modify policy and charging parameters in his own subscriber account and also policy and charging parameters in a subscriber account associated with his subscriber account.

The aforementioned and other aspects of the invention will be apparent from and elucidated with reference to the embodiments described hereinafter making reference to the accompanying drawings

In the drawings,
- Fig. 1: is a schematic depiction of a mobile telecommunication system in which mobile users are enabled to modify policy and charging parameters in real time and

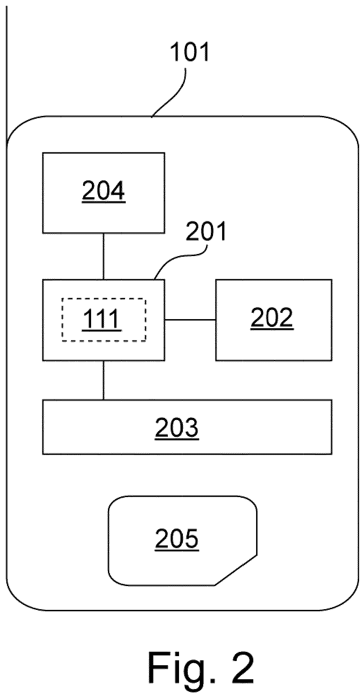

- Fig. 2: is a schematic depiction of a mobile communication device used in the mobile communication system.

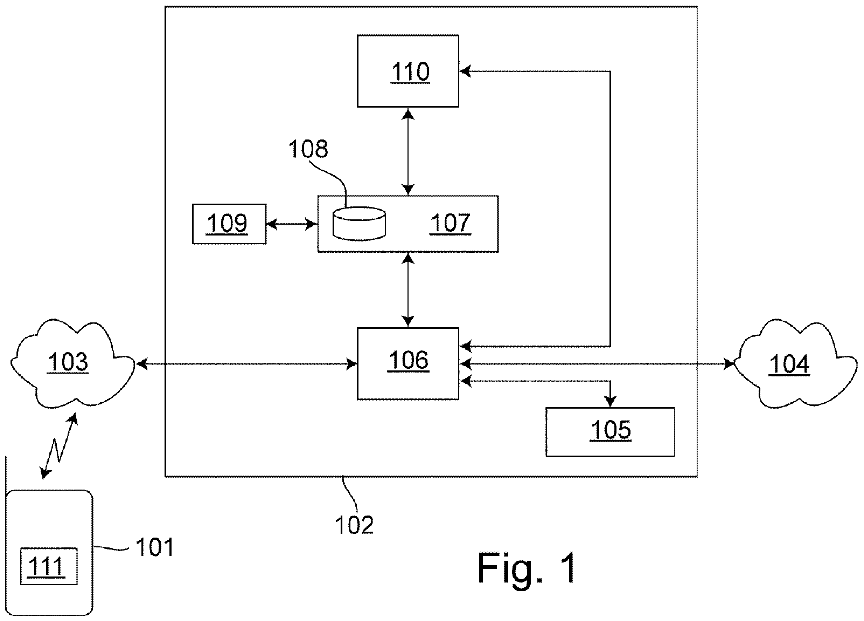

The mobile device 101 of a user accesses the mobile communication network 102 wirelessly through an access network 103 in order to use resources and services of the mobile communication network 102. The services provided by the mobile communication network 102 may comprise services for voice communication with a communication partner, messaging services, such as MMS (Multi Media Messaging Service) and SMS (Short Message Service) and a data connection service for establishing a data connection to a data network 104, which may be the Internet, for example. The data connection service allows accessing network resources and/or services provided in the data network 104 by corresponding servers, which are not shown in the figures. The mobile communication network 102 can be accessed by a plurality of mobile user devices in essentially the same way. In figure 1, the mobile device 101 is shown as one example of such mobile devices.

The mobile device 101 is a mobile data processing device which comprises a processor unit 201 for executing software applications and a memory unit 202 coupled to the processor unit 201 for storing software applications and further data. Interaction with the user of the mobile device 101 are made possible by a user interface 203, which may comprise input means for receiving user inputs and output means for generating visual, audible and/or haptic outputs to the user. The user interface 203 may include one or more input means. Examples of input means comprise a keyboard, a joystick and a touch screen display for tactile user inputs, a microphone for audio inputs and a camera for visual user inputs. The output means may comprise a display and/or a loudspeaker. For connecting to the access network 103, the mobile device 101 comprises a wireless modem 204 that includes radio hardware for establishing a radio connection to the access network 103 and provides radio-related functionality, which is not included in the processor unit 201. Furthermore, if required by the mobile communication network 102 and/or the access network 103, the mobile communication device 101 includes a subscription identification module 205, which provides data and functions for proving towards the mobile communication network 102 that the mobile device 101 is used in connection with a valid subscription to the mobile communication network 102. In exemplary embodiments, the subscription identification module 205 may be configured as a SIM (Subscriber Identity Module) or USIM (Universal Subscriber Identity Module) according to the 3GPP (3rd Generation Partnership Project) specifications.

The access network 103 may be configured as a cellular network. In this configuration, each cell of the access network 103 is supplied by a base station which serves as an access point within the cell and through which mobile devices 101 are connected to the mobile communication network 102. Examples of radio access technologies which may be employed in the access network 103 include 2G, 3G or 4G radio access as specified by the 3GPP. In view of accessing the data network 104, It should be understood that in addition to the access network 103, further wireless or wired access networks, which are not shown in figure 1, may be provided through which a mobile device 101 can connect to the data network 104 directly or through further networks, if the support the access technology provided by the access networks. Examples of such access networks are WiFi networks and local wired networks. Thus, the data network 104 may also be accessed independently of the access network 103 and the mobile communication network 102.

In the mobile communication network 102, services are accessed through a gateway 106 which routes the connection to the mobile device 101 to an application server 105 within the mobile communication network 102 or to the external data network 104. The gateway 106 may be responsible for establishing a communication context between the mobile communication network and the mobile device 101. And the gateway 106 is configured to allow or deny access to services and resources of the mobile communication network 102 in accordance with policy and charging parameters. Moreover, the gateway 106 provides functionality for monitoring network usage of mobile devices 101. This may include registering accesses and access attempts to services and resources by a mobile device 101 and measuring data volumes transmitted to and from a mobile device 101. In one embodiment, the gateway 106 comprises a GGSN (GPRS Gateway Support Node).

While some services provided by the mobile communication network 102 are provided via the gateway 106 without the invocation of further application servers 105 of the mobile communication network 102, further services are provided by application servers 105 to which a mobile device 101 may connect through the gateway 106. Examples of services provided by applications servers 105 are messaging services, such as, for example SMS provided by means of an application server 105 configured as an SMS Center (SMSC) and MMS provided by an application server 105 configured as MMS Center (MMSC). In packet switched (PS) mobile communication networks 102, telephone calls are established as so called voice-over-IP calls through an application server 102, which may be included in the IP Multimedia Subsystem (IMS), for example. Data connections into the data network 105 may be established via the gateway 106 without involving a further application server 105 of the type described before.

The gateway 106 is coupled to a policy and charging subsystem (PCSS) 107 of the mobile communication network 102. Furthermore, application servers 105 of the mobile communication network 102 may be connected to the PCSS 107. The PCSS 107 manages policy and charging parameters of subscribers to the mobile communication network 102 and controls the enforcement of the policy an charging parameters in the in the gateway 106 and in one embodiment also in the application servers 105. Policy parameters of subscribers are stored in a subscriber database 108 of the PCSS. Charging parameters may also be stored in the subscriber database 108, or the charging parameters are stored in a further database within or connected to the PCSS 107. The policy and charging parameters of one subscriber to the mobile communication network 102 are part of a collection, which is referred to as subscriber account herein.

Examples of policy parameters include subscriber specific limits, such as limits of downloadable data volumes or usable telephone minutes, Quality of Service (QoS) parameters, such as maximum bandwidth and priorities, particularly priorities for forwarding data to and from the subscriber's mobile device 101. The policy parameters also may specify resources of the mobile communication network 102 and/or services provided by the mobile communication network 102, this subscriber is allowed to use, and/or resources and/or services the subscriber is not allowed to use. In addition, policy parameters may define data filtering rules specifying contents, services and applications provided by the data network 104, which the user is not allowed to access. Such rules may be based on data content and/or network addresses in the data network 104 and are applied by blocking access attempts of the subscriber.

Charging parameters of a subscriber may include active tariffs of the subscriber and so-called bundles, the subscriber has booked. Such bundles may include predefined data volumes or telephone minutes to be paid in advance. Such charging parameters may be correlated to the policy parameters. In particular, certain tariff or bundle may imply related policy parameters. For instance, certain tariff may be related to a certain QoS parameter and in order to improve the available QoS, the subscriber has to change his tariff. Bundles are usually related to limits specifying the data volume or overall call duration the bundle provides. In addition, the charging parameters may also indicate authorizations of a subscriber to access certain services and/or resources of the mobile communication network 102.

Form the foregoing description it will be understood that a change of a charging parameter may also results in a change of one or more related policy parameters, and a change of a policy parameter may require a change of at least one related charging parameter. Furthermore, the skilled person has a great freedom in classifying s specific parameter as policy or charging parameter. Preferably, a subscriber does only have to make a change to one parameter of a group of related parameters. When such change is made, the other parameter may be automatically adapted accordingly. This adaptation may be made by the PCSS 107 using predefined rules or in another entity, which is involved in the process of changing parameters, such as the communication server 110 described herein.

For enforcing the policy and charging parameters of a subscriber, the gateway 106 and the PCSS 107 interact through the interface provided between the two components. For a connection of the subscriber, the PCSS 107 may provide to the gateway 106 the relevant parameters, such as QoS parameters and data filtering rules to be applied to the subscriber's connection and the gateway 106 configures the connection accordingly. In case a charging and policy parameter of a subscriber changes during an active connection of the subscriber, the PCSS 107 is able to inform the gateway 106 about the parameter change and, upon receiving such notification, the gateway 106 is able to reconfigure the connection of the subscriber in accordance with the new value of the parameter in question. When a subscriber attempts to access services and resources of the mobile communication network 102, which are subject to access restrictions, the gateway 106 may query the PCSS 106 in order to determine whether the subscriber is allowed to access the desired resource or service. Access to the resource or service is granted only in case the PCSS 107 notifies the gateway 106 but the subscriber is allowed to access the resource or service.

The interaction between the gateway 106 and the PCSS 107 allows for a policy and charging control in real time. This particularly means that the gateway 106 enforces the policy and charging parameters of a user at each point in time in their currently valid form. This is achieved by notification of changes sent from the PCSS 107 to the gateway 106 if necessary and by the queries whether the subscriber is allowed to access certain resource or service at the time the access attempt is made.

In connection with monitoring the network usage of subscribers, the gateway 106 also provides consumption data of subscribers to the PCSS 107. Such consumption data may comprise data volumes transmitted to and from the mobile devices 101 of the subscribers or durations of telephone calls involving the mobile devices 101 of the subscribers. The gateway 106 may provide the consumption data to the PCSS 107 in regular time intervals. Further consumption data related to services of the mobile communication network 102 may be provided to the PCSS 107 by the application servers 105. For instance, an application server 105 providing a messaging service, such as MMS or SMS, may report the number of messages the subscriber sent and/or received using the messaging service. In the PCSS 107 consumption data may be registered under the account of the subscriber to which they relate. In doing so, the PCSS 107 may aggregate consumption data over certain time period in order to determine aggregated consumption data for that period. The period may correspond to the accounting period for the respective subscriber. The PCSS 107 may also use the consumption data for charging the user for using the services of the mobile communication network 102, if the subscriber's tariff provides for a consumption-based charging.

Moreover, the gateway 106 and preferably also the application servers 105 in the mobile communication network 102 are enabled to notify the PCSS 107 when predetermined events occur. In principle, such notifications may apply to any event the occurrence of which can be determined in the gateway 104 in connection with its utilization by a subscriber. The same applies to application servers 105, if it is provided that the application servers 105 detect and report events. In particular, events may comprise accesses and access attempts of a subscriber to predetermined resources and/or services within the mobile communication network 102. Furthermore, events may relate to the content of data transmitted from the mobile device 101 of a subscriber to the data network 101 or vice versa. Such event may include access to a predetermined network address in the data network 102 or the transmission of data of predetermined type, such as video and/or audio streaming data.

Moreover, events may refer to a certain threshold of predetermined consumption data of the subscriber. Such an event is determined to occur, if it is detected that the threshold is reached. The threshold specifies a predetermined value of the consumption data and optionally a time period in which the value is to be reached. Examples are thresholds of the data volume transmitted to the mobile device 101 of the subscriber at all times or within a predetermined period of time. Since the gateway 106 and the PCSS 107 dispose of consumption data of the subscribers, the occurrence of the reach of a threshold may be detected either in the gateway 106 or in the PCSS 107. In addition, further events may be detected in the PCSS 107 instead of the gateway 106 or an application server 105.

Furthermore, events may relate to the location of a mobile device 101 of a subscriber. Location information may be reported by the mobile device or determined in in the gateway 106 or an application server 105 in a way known to a person skilled in the art. For instance, the cell of the access network 102 may be determined as location information. The occurrence of a location-related event is detected when it is determined that the mobile device 101 of the subscriber has entered a predetermined location. As an example, the occurrence of a location-related event may be detected when it is detected that the mobile device 101 enters a cell of an access network 103 of a foreign mobile network operator. In response to the occurrence of such event, a recommendation may be generated in way described below, which offers to change to another tariff with better conditions for using the foreign access network 103.

In addition, events may also relate to the type of the mobile device 101, which may be determined in the gateway 106. Different categories of devices may be defined, which may include devices having different capabilities, and the occurrence of an event may be detected, when it is determined that the user accesses the mobile communication network 102 using a predetermined type of device for the first time. As an example, in response to the occurrence of such event, a recommendation for increasing the QoS may be generated for a subscriber, when the subscriber uses a device with higher capabilities for the first time.

Detection of events in the gateway 106 or in an application server 105 may require a corresponding request for registration of the event to be monitored sent from the PCSS 107 to the gateway 106 or an application server 105. The request particularly specifies the event and preferably also one or more subscribers. Upon receipt of the request, the gateway 106 or the application server 105 watches for the occurrence of the event for the specified subscribers. If the gateway 106 or the application server 105 has determined that the event has occurred for at least one of the specified subscribers, the gateway 106 or the application server 105 transmits a corresponding notification to the PCSS 107.

The PCSS 107 is connected to a provisioning system 109 of the operator of the mobile communication network 102. Using the provisioning system 109 the operator is able to define policy and charging parameters for subscribers to the mobile communication network 102. The operator may define such parameters on his own initiative or in communication with the subscribers. For instance when the subscriber communicates a desired parameter change in an office of the operator or to a call centre of the operator, the operator can make the desired change using the provisioning system 109.

The PCSS 107 is also connected to a communication server 110, which allows subscribers to the mobile communication network 102 to receive information about current values of their policy and charging parameters and to make changes to their policy and charging parameters. The communication server 110 communicates with the mobile devices 101 of subscribers either via the mobile communication network 102 and the gateway 106 or via another network. For instance, a mobile device 101 may communicate with the communication server 110 through the data network 104 to which the communication server 110 may be connected, and the mobile device 101 may access the data network 104 via a further network, such as, for example, a WiFi network, instead of the mobile communication network 102. For communicating with the communication server 110, a mobile device 101 comprises a communication application 111, which is configured to interact with the communication server 110. The communication application 111 is installed in the mobile device 101 and executed in the processor unit 201 of the mobile device 101.

The communication application 111 provides a graphical user interface, which is presented at the user interface 203 of the mobile device 101. The graphical user interface of the communication application 111 allows displaying information received from the communication server 110 to the user of the mobile device 101 and allows the user to make inputs which are evaluated by the communication application 111 and which can be communicated to the communication server 110. For generating and presenting the graphical user interface, the communication application 111 comprises corresponding functionality. Preferably, the communication application 111 also provides graphical elements of the graphical user interface, which can be filled with information provided by the communication server 110. Moreover, the communication application 111 includes control elements, such as buttons and checkboxes for receiving user actions in the graphical user interface. The control elements can be presented in connection with information provided by the communication sever 110. Actions made using the control elements may be communicated to the communication server 110 by the communication application 111. The actions include commands for making changes to the policy and charging parameters of the user. For instance, the user can make an action for selecting a new tariff option and/or a bundle using a control element of the graphical user interface provided by the communication application 111. Since the graphical elements and the control elements are provided by the communication application 111, the communication server 110 provides information to the communication application 111 and the elements of the graphical representation of the information is provided by the communication application 111.

Using the communication application 111, a subscriber may select policy and charging parameters to be modified by himself on his own initiative. Furthermore, one embodiment includes that the communication server 110 is configured to determine recommendations for changing policy and charging parameters. A first type of recommendations is referred to as static recommendations hereinafter. Static recommendations are only communicated to the user, when he accesses the communication application 1111. The static recommendations are determined in the communication server 110 using preconfigured rules stored therein. According to the rules, the communication server 110 may determine recommendations based on the current values of the policy and charging parameters of the subscriber. For instance, in a tariff system including graded tariffs, the recommendation for a subscriber includes a tariff upgrade to the next grade, and/or recommendations include tariff options the user currently has not subscribed to.

In addition or as an alternative, static recommendations may be determined based on current values of the consumption data measured for the subscriber. In particular, there may be preconfigured thresholds of specific consumption parameters, such as, for example, the data volume transmitted to the mobile device 101 of a subscriber within a predefined time period, and a corresponding recommendation may be generated, when the consumption parameter reaches the threshold. For instance, if the aforementioned data volume reaches a predetermined threshold, a recommendation for a tariff including a higher data volume or for increasing the maximum bandwidth may be generated.

In addition or as an alternative to the generation of static recommendations, the communication server 110 may be enabled to generate further recommendations, which are referred to as dynamic recommendations herein and involve a notification sent from the communication serer 110 to the communication application 111. Dynamic recommendations are generated in response to the occurrence of an event. Preferably, there may be preconfigured events registered for monitoring in the gateway 106 and/ the application servers 105. In addition or as an alternative, one or more preconfigured events may be registered for monitoring in the PCSS 107, if such events are to be detected in the PCSS 107. In one embodiment, the events are monitored without making differences between subscribers to the mobile communication network 102. In this embodiment, the events may be fixedly preconfigured in the network elements, i.e. the gateway 106, the application servers 105 and the PCSS 107, in which they are detected. When the PCSS 107 is notified by the gateway 106 or an application server 105 that one of the preconfigured events has occurred, or when the PCSS 107 detects the occurrence of one of the preconfigured events, the PCSS 107 sends a notification to the communication server 110 specifying the event that has occurred and the subscriber for which the event has occurred.

In a further embodiment, the events are registered for being monitored for specific subscribers. The registration may be made based upon the current values of policy and charging parameters of the subscriber and/or based upon consumption data of the subscriber. Thus, the registration of certain events may be made for subscribers that have subscribed to certain tariff, for example. The registration may be initiated by the communication server 110 as a result of an evaluation of the current policy and/or charging parameters and consumption data for the subscriber. For making the evaluation, the communication server 110 may receive the parameters and consumption data from the PCSS 107. For instance, the PCSS 107 may transmit the policy and charging parameters and/or consumption data for the purpose of the evaluation, when a charging parameter of a subscriber has changed or when a further predetermined parameter of the subscriber has been modified. When the communication server 110 has determined the events to be monitored for a specific subscriber, the communication server 110 may send a corresponding request for monitoring the event to the PCSS 107. The request also specifies the subscriber for which the occurrence of the event is to be monitored. In response to the request, the PCSS 107 may register the event in the gateway 105 or the appropriate application server 105 for the specified subscriber, or the PCSS 107 itself monitors the event for the specified subscriber. When the PCSS 107 is notified by the gateway 106 or an application server 105 that one of the preconfigured events has occurred, or when the PCSS 107 detects the occurrence of one of the preconfigured events, the PCSS 107 again notifies the communication server 110 and the notification specifies the event that has occurred and the subscriber for which the event has occurred.

In connection with dynamic recommendations and the events based on which they are determined, it will be understood that some events do not have to be registered for being monitored especially in order to determine dynamic recommendations. Rather, some events are also registered for other purposes, such as, for example, in connection with accounting. If the occurrence of an event being registered for monitoring in view of the determination of a dynamic recommendation and in view of another purpose, the PCSS 107 notifies the communication server 110 about the occurrence of the event in addition to performing another action associated with the occurrence of the event.

When the communication server 110 is notified about the occurrence of an event, the communication server 110 determines a recommendation based on the event and optionally also based on current values of policy and charging parameters. The policy and charging parameters are retrieved from the PCSS 107 for this purpose. In particular, the recommendation may be determined based on the current tariff and/or QoS of the subscriber. Any recommendation having reference to the events that can be detected within the mobile communication network 102 may be determined by the communication server 110. Examples are recommendations to improve one or more QoS parameters, such as the maximum bandwidth, when it has been determined that the user downloads streaming audio and/or video data or when it has been determined that the user connects to the mobile communication network 102 with a more sophisticated mobile device 101 of a predetermined type, which offers services requiring a higher QoS.

When the communication server 110 has determined a dynamic recommendation for a subscriber, the communication server 110 preferably transmits a notification to the mobile device 101 of the subscriber. The notification includes information relating to the recommendation. Preferably, the notification is sent to the mobile device 101 of the subscriber that utilizes the connection to the mobile communication network 102 for which the occurrence of the event has been detected. In one embodiment, subscribers may also register further devices for receiving notifications. Like the mobile device 101, such devices may also dispose of a communication application 111, which is used for accessing the recommendations. The devices may be specified in the subscriber accounts in the PCSS 107 as one element of the policy parameters, for example, and the communication server 110 may receive this information when retrieving the policy and charging parameters for the subscriber. When the communication server 110 determines that plural devices are registered, it transmits notifications to all registered devices.

The notification may be sent using any suitable notification or messaging service, such as SMS, MMS, E-mail and similar. In one embodiment, the notification may be transmitted to the communication application 111 of the mobile device 101 using a push notification service provided by the mobile device 101. When the communication application 111 receives a push notification via such service, it may inform the user of the mobile device 101 visually and/or in another way about the receipt of the notification. If the notification is transmitted to plural devices of a subscriber, different notification and messaging services may be used. For each device, the subscriber may be specified within the subscriber account information of the user.

The notification preferably includes a reference to information provided by the communications server 110 which inform the user about the recommendation and allow him to change the policy and charging parameters according to the recommendation. For accessing the information, the subscriber may use the communication application 111. As will be described in the following general description of the communication application 111, the communication application 111 retrieves the reference information from the communication server 110 and presents the information to the user of the mobile device 101. Moreover, the communication application 111 enables the user to change the policy and charging parameters according to the recommendation.

In addition to dynamic recommendations, notifications may also be used to inform a subscriber that a predetermined event has occurred. In particular, the subscriber may be informed when consumption data reach a predefined threshold corresponding to a consumption limit of the subscriber or a predefined fraction of the consumption limit. Hereby, the user is informed that the limit has been reached or will be reached in short time. The consumption limit may be a limit of the data volume the user can download for free due to his current tariff. Such notifications may include in information about the event, such that the user receives information about the event without having to invoke the communication application 111. In addition or as an alternative, the notification may include a reference to information provided by the communication server 110, which may be retrieved by means of the communication application 111 as described in the following general description of the communication application 111.

The communication application 111 within the mobile device 101 of the subscriber is invoked for viewing and changing policy and charging parameters and consumption data. The subscriber may invoke the communication application 111 manually on his own initiative by means of a corresponding user input at the mobile device 101, or the communication application 111 may be invoked upon a receipt of a notification in the mobile device 101. In the latter case, the reference included in the notification may be passed to the communication application 111, when the notification has been received outside of the communication application 111. If the communication application 111 is invoked upon receipt of a notification, the invocation may also require a corresponding user action.

When the communication application 111 is started, it does not have the policy charging parameters of the subscriber available before having communicated with the communication server 110, since the policy and charging parameters are not stored in the mobile device 101. Communication with the communication server 110 begins upon the invocation of the communication application 111. As described before, the connection between the communication server 110 and the communication application 111 may be established via the mobile communication network 102 or through the data network 104, which the mobile device 101 accesses through another access network.

Upon invocation, the communication application 111 firstly sends a request for information to the communication server 110. If the communication application 111 has been invoked on the subscriber's own initiative, i.e. without an input of a reference to specific information, the request may be directed to predetermined information relating to the policy and charging parameters of the subscriber. Such information may include the current value of predetermined policy and charging parameters, such as an indication of the current overall tariff of the subscriber. In addition or as an alternative to policy and charging parameters, the information may include consumption data, which may refer to a predetermined time-period, such as the current accounting period of the subscriber. The consumption data may include data volumes, number of messages, call minutes and similar data and/or corresponding accounting information. Preferably, the information also includes recommendations for parameter changes. This may be static recommendations which are generated based upon the current values of the policy and charging parameters of the subscriber.

If the communication application 111 has been invoked upon receipt of a notification including a reference to specific information, the communication application 111 sends a request for the referenced information to the communication server 110. As described before, the information may refer to a dynamic recommendation to change policy and charging parameters or the information may relate to a threshold the consumption data of the user has reached. When a notification is present, the communication application 111 may automatically request from the communication server 110 the information referenced in the notification. However, in a preferred embodiment, the user selects upon the invocation of the communication application 111 whether predetermined general information or the information referenced in the notification are retrieved from the communication server 110.

In connection with the request of the communication application 111 the subscriber is preferably authenticated in the communication server 110. The subscriber authentication may be made using credentials associated with the subscriber, such as, for example, a user name and a password. The credentials may be entered manually by the subscriber at the mobile device 101, when the communication application is invoked or, the credentials may be stored in the mobile device 101, and the communication application 111 may access the stored credentials upon invocation. The communication application 111 sends the credentials to the communication server 110 together with the first request or in a separate communication step. The communication server 110 validates the credentials and uses the credentials for identifying the subscriber. Access to the policy and charging parameters of the subscriber and further information is only granted, if the subscriber credentials have been successfully verified by the communication server 110. In case the communication application 111 communicates with the communication server 110 through the mobile communication network 102, the subscriber already has been identified and authenticated in the mobile communication network 102. Therefore, the identity of the subscriber may be provided from the mobile communication network 102 to the communication server 110 and no further authentication of the subscriber may be made. The transmission of credentials from the mobile device 101 to the communication server 110 can be dispensed with in this case.

When the communication server 110 receives the request from the communication application 111, and after the subscriber has been identified and successfully authenticated, the communication server 110 collects the requested information and transmits those information to the communication application 111. If the request refers to current values of policy and charging parameters and/or consumption data of the subscriber, the communication server 110 requests the information from the PCSS 107 of the mobile communication network 102 through the interface between the communication server 110 and the PCSS 107. Each request includes an indication of the subscriber identity and specifies the information to be provided. The PCSS 107 collects this information and returns the information to the communication server 110. When the communication server 110 has received the requested information from the PCSS 107, it generates static recommendations based upon the information, as already described before. Then, the communication server 110 sends the information received from the policy and charging subsystem 107, i.e. the current values of the requested policy and charging parameters of the user, together with the generated recommendations to the communication application 111.

The communication application 111 presents the received information to the user in its graphical user interface. The presentation may be made within one or more pages of the graphical user interface and comprises in addition to the received information controlled elements allowing the user to make inputs. There may be provided control elements for changing specific policy and charging parameters. Moreover, there may be controlled elements allowing the user to accept the presented recommendations. As described before, the graphical elements for establishing the page structure of the graphical user interface may be stored in the communication application 111 and may be filled with the information received from the communication server 110.

If the user decides to change a policy and charging parameter and/or to accept a recommendation, the user makes a corresponding input at the graphical user interface of the communication application 111. In particular, the user may operate a corresponding control element within the graphical user interface. The communication application registers the user inputs and notifies the communication server about the user input. In doing this, the communication application communicates to the communication server changes to policy and charging parameters made by the user or informs the communication server 110 that the user has accepted a specific recommendation. When the communication server 110 receives the notification about the user input from the communication application 111, it controls the modification of the policy and charging parameters of the user in accordance with the values given by the users and/or the accepted recommendations. This is done by transmitting a request for modifying the policy and charging parameters to the PCSS 107 which fulfils the request preferably essentially immediately. The request includes the new values of the policy and charging parameters changed by the user. If the user has accepted a recommendation, the communication server 110 determines the corresponding new values of policy and charging parameters and requests the change of such parameters with the PCSS 107.

Preferably, the PCSS 107, confirms the change of the parameters to the communication server 110. In addition, the communication server 110 may send a confirmation of the parameter change to the communication application 111 and the communication application 111 may present the confirmation to the subscriber at the graphical user interface.

In one embodiment, the communication application 111 does not only allow a subscriber to view and modify policy and charging parameters of his own subscriber account in the mobile communication network 102, but enables the subscriber to also view and/or modify policy and charging parameters of associated subscriber accounts. Generally, any further subscriber account can be associated with a subscriber such that the subscriber is able to view and change parameters of that account. Preferably, the association requires the consent of the other subscriber, which may be given to the operator of the mobile communication network 102 in any possible way. For instance, the association of a subscriber account to another subscriber may already be established when the subscription is established and the corresponding subscriber account is generated in the mobile communication network 102. Subscriber accounts, which are associated with a subscriber, may comprise accounts of family members, or subscriber account of company members may be associated with a further account allowing a central management of the member accounts.

When a subscriber account is associated with one or more further subscriber accounts, the communication server 110 preferably transmit upon request by the communication application 111 a list of the associated subscriber accounts to the communication application 111. From the list the user of the mobile device 101 may select a subscriber account. Then, the communication application 111 sends a request for policy and charging parameters and/or consumption data of the selected subscriber account to the communication server 110. The communication server 110 returns the requested information to the communication application 111 of the mobile device 101, and the user of the mobile device 101 may view the information and change policy and charging parameters in the same way as has already been described before in view of the policy and charging parameters and/or consumption data of his own account.

In one embodiment, a subscriber may be allowed to view and/or modify the policy and charging parameters of associated subscriber accounts without restrictions. This means, the subscriber has the same rights to view and/or modify the policy and charging parameters as in his own subscriber account. However, in a further embodiment, a subscriber may have other rights to view and/or modify the policy and charging parameters of associated subscriber accounts than the owner of the account. The access rights of the subscriber itself and associated subscribers are preferably stored within the subscriber account.

In an example, the subscriber may only be allowed to view and/or modify a subset of the policy and charging parameters. This may be advantageous, when a subscriber account of a company member is associated with an administrator of the company that is only allowed to manage a predetermined subset of the policy and charging parameters of a subscriber. Likewise, it may be possible that the subscriber has the right to view and/or modify the complete set of policy and charging parameters, while the owner of the subscriber account is only allowed to view and/or modify a subset of the policy and charging parameters. The latter rights may be provided when the subscriber account of a child is associated with the subscriber account of one of his parents, for example.

Furthermore, the rights of a subscriber for viewing policy and charging parameters in the own or in an associated subscriber account may differ from the rights for modifying the policy and charging parameters in the account. Thus, a subscriber may be allowed to view the complete set of policy and charging parameters, while he may only be allowed to modify a subset of the policy and charging parameters in the associated account.

While the invention has been illustrated and described in detail in the drawings and foregoing description, such illustration and description are to be considered illustrative or exemplary and not restrictive; the invention is not limited to the disclosed embodiments. In particular, the invention is not restricted to a manipulation of policy and charging parameters as described before. Likewise, it is possible to allow for modifying policy parameters only or charging parameters only in an analogue way. Other variations to the disclosed embodiments can be understood and effected by those skilled in the art in practicing the claimed invention, from a study of the drawings, the disclosure, and the appended claims. The scope of the invention is defined by the appended claims. In the claims, the word "comprising" does not exclude other elements or steps, and the indefinite article "a" or "an" does not exclude a plurality. A single processor or other unit may fulfil the functions of several items recited in the claims. Any reference signs in the claims should not be construed as limiting the scope.

## Claims

1. A system for policy and/or charging control in a mobile communication network (102) comprising a policy and/or charging control subsystem (107) storing policy and/or charging parameters in a subscriber account and
the system further comprising a communication server (110) operatively coupled to the policy and/or charging control subsystem (107) of the mobile communication network (102), wherein the communication server (110) is configured to determine a recommendation for changing at least one policy or charging parameter and to provide the recommendation to a communication application (111) in a subscriber terminal device (101) for presenting the recommendation at the subscriber terminal device (101), wherein the recommendation is determined based on a predetermined event, the occurrence of the event being detected in the mobile communication network (102), wherein the event is a subscriber of the subscriber account requesting a predetermined service, the access to said predetermined service being allowed or denied in accordance with said policy and / or charging parameters, the system further comprising the communication application (111) included in the subscriber terminal device,
wherein the communication server (110) is configured to receive a change request for changing a policy or charging parameter in the subscriber account from the communication application, wherein the request is sent by the communication application in reaction to the recommendation received from the communication server (110), and wherein the communication server (110) is further configured to instruct the policy and/or charging control subsystem (107) to change the policy or charging parameter according to the received request.

2. A system according to claim 1, wherein the policy and/or charging control subsystem (107) is configured to change the policy or charging parameter essentially immediately, when receiving the instruction to change the subscriber parameter.

3. A system according to claim 1 or 2, wherein the communication server (110) is configured to transmit a current value of at least one policy or charging parameter and/or consumption data included in the subscriber account to the communication application (111), the communication application (111) being configured to display the received value at the subscriber terminal device.

4. A system according to claim 3, wherein the communication server (110) is configured to retrieve the current value of the policy and charging parameter and/or the consumption data from the policy and charging subsystem (107).

5. A system according to one of the preceding claims, wherein the recommendation is provided to the communication application (111) in connection with a notification, the transmission of the notification being initiated by the communication server (110).

6. A system according to one of the preceding claims, wherein the communication server (110) is configured to determine the recommendation based on current values of policy and charging parameters and/or monitored usage of the mobile communication network (102) by the subscriber.

7. A system according to one of the preceding claims wherein the communication server (110) is configured to determine the recommendation based on consumption data measured for the subscriber and/or a determined location of the subscriber.

8. A system according to one of the preceding claims, wherein the communication server (110) is configured to change the policy or charging parameter upon verifying the authorization of a user of the communication application (111) for changing the policy or charging parameter.

9. A system according to claim 8 wherein the communication server (110) is configured to determine that the user of the communication application (111) is authorized to change the policy and/or charging parameter, if the subscriber account belongs to the user and/or the subscriber account is associated with the subscriber account of the user.

10. A method for operating a mobile communication network (102), the mobile communication network (102) comprising a policy and/or charging control subsystem (107) storing policy and/or charging parameters in a subscriber account, a communication server (110) being operatively coupled to the policy and/or charging control subsystem of the mobile communication network (102) and the communication server (110) being configured to communicate with a communication application (111) included in a user terminal device, wherein the communication server (110) is further configured to determine a recommendation for changing at least one policy or charging parameter and to provide the recommendation to the communication application (111) for presenting the recommendation at the user terminal device, wherein the recommendation is determined based on a predetermined event, the occurrence of the event being detected in the mobile communication network (102), wherein the event is a subscriber of the subscriber account requesting a predetermined service, the access to said predetermined service being allowed or denied in accordance with said policy and / or charging parameters, the method comprising receiving in the communication server (110) a request for changing a policy or charging parameter in the subscriber account from communication application (111), wherein the request is sent by the communication application in reaction to the recommendation received from the communication server (110), and transmitting from the communication server (110) to the policy and/or charging control subsystem (107) an instruction to change the policy or charging parameter according to the received request.

## Patentansprüche

1. System für die Richtlinien- und/oder Gebührenberechnungssteuerung in einem Mobilkommunikationsnetz (102), das ein Richtlinien- und/oder Gebührenberechnungssteuerungs-Teilsystem (107) umfasst, das Richtlinien- und/oder Gebührenberechnungsparameter in einem Teilnehmerkonto speichert, und wobei das System ferner einen Kommunikationsserver (110) umfasst, der mit dem Richtlinien- und/oder Gebührenberechnungssteuerungs-Teilsystem (107) des Mobilkommunikationsnetzes (102) funktional gekoppelt ist, wobei der Kommunikationsserver (110) dafür konfiguriert ist, eine Empfehlung zum Ändern wenigstens eines Richtlinien- oder Gebührenberechnungsparameters zu bestimmen und die Empfehlung für eine Kommunikationsanwendung (111) in einer Teilnehmerendgerätvorrichtung (101) bereitzustellen, um die Empfehlung bei der Teilnehmerendgerätvorrichtung (101) darzustellen, wobei die Empfehlung auf der Grundlage eines vorgegebenen Ereignisses bestimmt wird, wobei das Auftreten des Ereignisses in dem Mobilkommunikationsnetz (102) detektiert wird, wobei das Ereignis ist, dass ein Teilnehmer des Teilnehmerkontos einen vorgegebenen Dienst anfordert, wobei der Zugriff auf den vorgegebenen Dienst in Übereinstimmung mit den Richtlinien- und/oder Gebührenberechnungsparametern gewährt oder verweigert wird, wobei das System ferner die in der Teilnehmerendgerätvorrichtung enthaltene Kommunikationsanwendung (111) umfasst, wobei der Kommunikationsserver (110) dafür konfiguriert ist, von der Kommunikationsanwendung eine Änderungsanforderung zum Ändern eines Richtlinien- oder Gebührenberechnungsparameters in dem Teilnehmerkonto zu empfangen, wobei die Anforderung durch die Kommunikationsanwendung in Reaktion auf die von dem Kommunikationsserver (110) empfangene Empfehlung gesendet wird, und wobei der Kommunikationsserver (110) ferner dafür konfiguriert ist, das Richtlinien- und/oder Gebührenberechnungssteuerungs-Teilsystem (107) anzuweisen, den Richtlinien- oder Gebührenberechnungsparameter in Übereinstimmung mit der empfangenen Anforderung zu ändern.

2. System nach Anspruch 1, wobei das Richtlinien- und/oder Gebührenberechnungssteuerungs-Teilsystem (107) dafür konfiguriert ist, den Richtlinien- oder Gebührenberechnungsparameter im Wesentlichen sofort zu ändern, wenn die Anforderung zum Ändern des Teilnehmerparameters empfangen wird.

3. System nach Anspruch 1 oder 2, wobei der Kommunikationsserver (110) dafür konfiguriert ist, einen gegenwärtigen Wert wenigstens eines Richtlinien- oder Gebührenberechnungsparameters und/oder in dem Teilnehmerkonto enthaltener Verbrauchsdaten an die Kommunikationsanwendung (111) zu senden, wobei die Kommunikationsanwendung (111) dafür konfiguriert ist, den empfangenen Wert bei der Teilnehmerendgerätvorrichtung anzuzeigen.

4. System nach Anspruch 3, wobei der Kommunikationsserver (110) dafür konfiguriert ist, den gegenwertigen Wert des Richtlinien- und Gebührenberechnungsparameters und/oder der Verbrauchsdaten von dem Richtlinien- und Gebührenberechnungsteilsystem (107) auszulesen.

5. System nach einem der vorhergehenden Ansprüche, wobei die Empfehlung für die Kommunikationsanwendung (111) in Verbindung mit einer Meldung bereitgestellt wird, wobei die Sendung der Meldung durch den Kommunikationsserver (110) initiiert wird.

6. System nach einem der vorhergehenden Ansprüche, wobei der Kommunikationsserver (110) dafür konfiguriert ist, die Empfehlung auf der Grundlage gegenwärtiger Werte der Richtlinien- und Gebührenberechnungsparameter und/oder der überwachten Nutzung des Mobilkommunikationsnetzes (102) durch den Teilnehmer zu bestimmen.

7. System nach einem der vorhergehenden Ansprüche, wobei der Kommunikationsserver (110) dafür konfiguriert ist, die Empfehlung auf der Grundlage für den Teilnehmer gemessener Verbrauchsdaten und/oder eines bestimmten Orts des Teilnehmers zu bestimmen.

8. System nach einem der vorhergehenden Ansprüche, wobei der Kommunikationsserver (110) dafür konfiguriert ist, den Richtlinien- oder Gebührenberechnungsparameter beim Überprüfen der Berechtigung eines Nutzers der Kommunikationsanwendung (111) zu ändern, um den Richtlinien- oder Gebührenberechnungsparameter zu ändern.

9. System nach Anspruch 8, wobei der Kommunikationsserver (110) dafür konfiguriert ist zu bestimmen, dass der Nutzer der Kommunikationsanwendung (111) berechtigt ist, den Richtlinien- und/oder Gebührenberechnungsparameter zu ändern, falls das Teilnehmerkonto zu dem Nutzer gehört und/oder falls das Teilnehmerkonto dem Teilnehmerkonto des Nutzers zugeordnet ist.

10. Verfahren zum Betreiben eines Mobilkommunikationsnetzes (102), wobei das Mobilkommunikationsnetz (102) ein Richtlinien- und/oder Gebührenberechnungssteuerungs-Teilsystem (107) umfasst, das Richtlinien- und/oder Gebührenberechnungsparameter in einem Teilnehmerkonto speichert, wobei mit dem Richtlinien- und/oder Gebührenberechnungssteuerungs-Teilsystem des Mobilkommunikationsnetzes (102) ein Kommunikationsserver (110) funktional gekoppelt ist und wobei der Kommunikationsserver (110) dafür konfiguriert ist, mit einer in einer Nutzerendgerätvorrichtung enthaltenen Kommunikationsanwendung (111) zu kommunizieren, wobei der Kommunikationsserver (110) ferner dafür konfiguriert ist, eine Empfehlung zum Ändern wenigstens eines Richtlinien- oder Gebührenberechnungsparameters zu bestimmen und die Empfehlung für die Kommunikationsanwendung (111) bereitzustellen, um die Empfehlung bei der Nutzerendgerätvorrichtung darzustellen, wobei die Empfehlung auf der Grundlage eines vorgegebenen Ereignisses bestimmt wird, wobei das Auftreten des Ereignisses in dem Mobilkommunikationsnetz (102) detektiert wird, wobei das Ereignis ist, dass ein Teilnehmer des Teilnehmerkontos einen vorgegebenen Dienst anfordert, wobei der Zugriff auf den vorgegebenen Dienst in Übereinstimmung mit den Richtlinien- und/oder Gebührenberechnungsparametern gewährt oder verweigert wird, wobei das Verfahren das Empfangen einer Anforderung zum Ändern eines Richtlinien- oder Gebührenberechnungsparameters in dem Teilnehmerkonto von der Kommunikationsanwendung (111) in dem Kommunikationsserver (110), wobei die Anforderung durch die Kommunikationsanwendung in Reaktion auf die von dem Kommunikationsserver (110) empfangene Empfehlung gesendet wird, und das Senden einer Anweisung zum Ändern des Richtlinien- oder Gebührenberechnungsparameters in Übereinstimmung mit der empfangenen Anforderung von dem Kommunikationsserver (110) an das Richtlinien- und/oder Gebührenberechnungssteuerungs-Teilsystem (107) umfasst.

## Revendications

1. Système pour la commande de politique et/ou de chargement dans un réseau de communication mobile (102) comprenant un sous-système de commande de politique et/ou de chargement (107) stockant des paramètres de politique et/ou de chargement dans un compte d'abonné et le système comprenant en outre un serveur de communication (110) couplé de manière opérationnelle au sous-système de commande de politique et/ou de chargement (107) du réseau de communication mobile (102), dans lequel le serveur de communication (110) est configuré pour déterminer une recommandation de changer au moins un paramètre de politique ou de chargement et pour fournir la recommandation à une application de communication (111) dans un dispositif de terminal d'abonné (101) pour présenter la recommandation au niveau du dispositif de terminal d'abonné (101), dans lequel la recommandation est déterminée en fonction d'un événement prédéterminé, l'occurrence de l'événement étant détectée dans le réseau de communication mobile (102), dans lequel l'événement est un abonné du compte d'abonné demandant un service prédéterminé, l'accès audit service prédéterminé étant autorisé ou refusé conformément auxdits paramètres de politique et/ou de chargement, le système comprenant en outre l'application de communication (111) inclue dans le dispositif de terminal d'abonné,
dans lequel le serveur de communication (110) est configuré pour recevoir une demande de changement pour changer un paramètre de politique ou de chargement dans le compte d'abonné de l'application de communication, dans lequel la demande est envoyée par l'application de communication en réaction à la recommandation reçue du serveur de communication (110), et dans lequel le serveur de communication (110) est en outre configuré pour instruire le sous-système de commande de politique et/ou de chargement (107) de changer le paramètre de politique ou de chargement conformément à la demande reçue.

2. Système selon la revendication 1, dans lequel le sous-système de commande de politique et/ou de chargement (107) est configuré pour changer le paramètre de politique ou de chargement essentiellement immédiatement lors de la réception de l'instruction de changer le paramètre d'abonné.

3. Système selon la revendication 1 ou 2, dans lequel le serveur de communication (110) est configuré pour transmettre une valeur actuelle d'au moins un paramètre de politique ou de chargement et/ou des données de consommation inclues dans le compte d'abonné à l'application de communication (111), l'application de communication (111) étant configurée pour afficher la valeur reçue au niveau du dispositif de terminal d'abonné.

4. Système selon la revendication 3, dans lequel le serveur de communication (110) est configuré pour récupérer la valeur actuelle du paramètre de politique et de chargement et/ou les données de consommation du sous-système de politique et de chargement (107).

5. Système selon une des revendications précédentes, dans lequel la recommandation est fournie à l'application de communication (111) en connexion avec une notification, la transmission de la notification étant initiée par le serveur de communication (110).

6. Système selon une des revendications précédentes, dans lequel le serveur de communication (110) est configuré pour déterminer la recommandation en fonction de valeurs actuelles de paramètres de politique et de chargement et/ou de l'usage surveillé du réseau de communication mobile (102) par l'abonné.

7. Système selon une des revendications précédentes, dans lequel le serveur de communication (110) est configuré pour déterminer la recommandation en fonction de données de consommation mesurées pour l'abonné et/ou d'un emplacement déterminé de l'abonné.

8. Système selon une des revendications précédentes, dans lequel le serveur de communication (110) est configuré pour changer le paramètre de politique ou de chargement dès la vérification de l'autorisation d'un utilisateur de l'application de communication (111) à changer le paramètre de politique ou de chargement.

9. Système selon la revendication 8, dans lequel le serveur de communication (110) est configuré pour déterminer que l'utilisateur de l'application de communication (111) est autorisé à changer le paramètre de politique et/ou de chargement si le compte d'abonné appartient à l'utilisateur et/ou le compte d'abonné est associé au compte d'abonné de l'utilisateur.

10. Procédé pour opérer un réseau de communication mobile (102), le réseau de communication mobile (102) comprenant un sous-système de commande de politique et/ou de chargement (107) stockant des paramètres de politique et/ou de chargement dans un compte d'abonné, un serveur de communication (110) étant couplé de manière opérationnelle au un sous-système de commande de politique et/ou de chargement du réseau de communication mobile (102) et le serveur de communication (110) étant configuré pour communiquer avec une application de communication (111) inclue dans un dispositif de terminal d'utilisateur, dans lequel le serveur de communication (110) est en outre configuré pour déterminer une recommandation de changer au moins un paramètre de politique ou de chargement et pour fournir la recommandation à l'application de communication (111) pour présenter la recommandation au niveau du dispositif de terminal d'abonné, dans lequel la recommandation est déterminée en fonction d'un événement prédéterminé, l'occurrence de l'événement étant détectée dans le réseau de communication mobile (102), dans lequel l'événement est un abonné du compte d'abonné demandant un service prédéterminé, l'accès audit service prédéterminé étant autorisé ou refusé conformément auxdits paramètres de politique et/ou de chargement,
le procédé comprenant recevoir dans le serveur de communication (110) une demande pour changer un paramètre de politique ou de chargement dans le compte d'abonné de l'application de communication (111), dans lequel la demande est envoyée par l'application de communication en réaction à la recommandation reçue du serveur de communication (110), et transmettre du serveur de communication (110) au sous-système de commande de politique et/ou de chargement (107) une instruction de changer le paramètre de politique ou de chargement conformément à la demande reçue.
